# EUROPÄISCHE PATENTSCHRIFT

(11) **EP 3 034 438 B1**
(45) Veröffentlichungstag und Bekanntmachung des Hinweises auf die Patenterteilung: **11.10.2017**
(21) Anmeldenummer: 15199370.6
(22) Anmeldetag: 10.12.2015
(51) Int. Cl.: B65G 47/14

(54) **SORTIER- UND VEREINZELUNGSEINRICHTUNG SOWIE VERFAHREN ZUM FÖRDERN, VEREINZELN UND AUSRICHTEN VON BAUTEILEN**
SORTING AND SEPARATION DEVICE AND METHOD FOR CONVEYING, SEPARATING AND ALIGNING COMPONENTS
DISPOSITIF DE TRI ET DE SÉPARATION ET PROCÉDÉ D'ACHEMINEMENT, DE SÉPARATION ET D'ALIGNEMENT DE COMPOSANTS

(30) Priorität: 19.12.2014 DE 102014119209
(43) Veröffentlichungstag der Anmeldung: 22.06.2016
(73) Patentinhaber: SIM Automation GmbH, 37308 Heilbad Heiligenstadt (DE)
(72) Erfinder: Timmermann, Rüdiger, 37073 Göttingen (DE); Brückner, Uwe, 37213 Witzenhausen (DE); Schulter, Viktoria, 99734 Nordhausen (DE); Althaus, Peter, 37308 Kalteneber (DE); Block, Mario, 37359 Büttstedt (DE)
(74) Vertreter: Lorenz, Bernd Ingo Thaddeus

(56) Entgegenhaltungen:
- WO-A1-02/02410
- JP-A- S60 262 716
- US-A1- 2013 125 737

## Beschreibung

Die vorliegende Erfindung betrifft eine Sortier- und Vereinzelungseinrichtung zum Fördern, Vereinzeln und Ausrichten von in der Regel gleich ausgestalteten Bauteilen gemäß dem Oberbegriff des Anspruchs 1. Gegenstand der Erfindung ist des Weiteren ein Verfahren zum Fördern, Vereinzeln und Ausrichten von Bauteilen mit der beschriebenen Sortier- und Vereinzelungseinrichtung, wobei die Sortierscheibe mit ihren Aufnahmetaschen dazu eingerichtet ist, die Bauteile in der Scheibenebene in einer vorgegebenen Drehausrichtung aufzunehmen und dass dem Scheibensortierer ein Plattenförderer mit einem Aufnahmebunker und zumindest einer Förderplatte vorgelagert ist.

Bauteile wie Schrauben, Hülsen, Muttern oder dergleichen werden in der Praxis häufig als lose Schüttware gelagert und einem Produktionsprozess zugeführt. Um derartige Teile weiter verarbeiten zu können, besteht häufig das Erfordernis, diese zu vereinzeln und in geeigneter Weise auszurichten, wozu beispielsweise Schwingförderer eingesetzt werden können.

Die Bauteile müssen aus der Schütte entnommen, korrekt ausgerichtet und vereinzelt werden. Die voneinander getrennten und korrekt ausgerichteten Gegenstände können sodann gegebenenfalls in einer Staustrecke hintereinander als eine Art Vorrat bereitgehalten werden. Allgemein wird eine sowohl zuverlässige als auch effiziente Ausrichtung der Bauteile angestrebt.

Aus der Praxis sind Scheibensortierer mit den eingangs beschriebenen Merkmalen bekannt, wobei einfache Produkte wie beispielsweise Deckel von Flaschen in den einzelnen Aufnahmetaschen angeordnet werden. Scheibensortierer zeichnet sich durch eine einfache Bauweise und eine gleichmäßig hohe Förderleistung aus. Die bekannten einfachen Bauteile wie Deckel von Flaschen werden üblicherweise derart in den zugeordneten Aufnahmetaschen aufgenommen, dass eine Symmetrieachse der entsprechenden Bauteile senkrecht zu der Scheibenebene ausgerichtet ist. Bei einem Deckel in Form eines Schraubverschlusses ist also beispielsweise die Oberseite des Deckels in der Aufnahmetaschen nach oben oder unten ausgerichtet, wobei ein solches Bauteil in der Scheibenebene eine beliebige Drehposition einnehmen kann.

Vor diesem Hintergrund liegt der vorliegenden Erfindung die Aufgabe zugrunde, eine Sortier- und Vereinzelungseinrichtung mit einem Scheibensortierer anzugeben, welche zum Fördern, Vereinzeln oder Ausrichten von gleichausgestalteten Bauteilen geeignet sein, welche entlang einer Längsachse einen Schaftabschnitt mit einem ersten Durchmesser und einen daran anschließenden Kopfabschnitt mit einem größeren zweiten Durchmessen aufweisen.

Gegenstand der Erfindung und Lösung der Aufgabe sind eine Sortier- und Vereinzelungseinrichtung gemäß Patentanspruch 1 sowie ein Verfahren zum Fördern, Vereinzeln und Ausrichten von Bauteilen gemäß Patentanspruch 6. Ausgehend von einer Sortier- und Vereinzelungseinrichtung zum Fördern, Vereinzeln und Ausrichten von Bauteilen gemäß dem Oberbegriff des Patentanspruches 1 ist erfindungsgemäß vorgesehen, dass die Aufnahmetasche eine einfache rechteckige Form aufweisen, wenn zwischen einem äußeren Rand der Sortierscheibe und den Aufnahmetaschen zumindest um einen Teil des Umfanges der Sortierscheibe ein ausreichend großer Spalt von beispielsweise 3 mm verbleibt, um einen ersten Abschnitt der Bauteile, also insbesondere den Schaftabschnitt, in den Aufnahmetaschen und einen zweiten Abschnitt der Bauteile, also insbesondere den Kopfabschnitt, in dem Spalt aufzunehmen. Im Rahmen der Erfindung kommt dem für die Bewegung zwischen der Sortierscheibe und dem Aufnahmeraum erforderlichen Spalt eine weitere Funktion zu.

Während üblicherweise große Spalte in der Regel vermieden werden, wird gemäß der beschriebenen Variante der Spalt als Aufnahmeabschnitt für die Bauteile benutzt, so dass sich eine besonders einfache konstruktive Ausgestaltung ergibt. Alternativ könnte auch vorgesehen sein, dass sich die Sortierscheibe bis kurz vor den Rand des Aufnahmeraums erstreckt, wobei lediglich ein die Bewegung ermöglichender Spalt verbleibt, wobei dann jedoch ausgehend von der beschriebenen Form der Bauteile eine T-Form der Aufnahmetaschen vorzusehen ist.

Es ist ferner auch vorgesehen, dass unterhalb der Aufnahmetasche ein Stützring zwischen der Sortierscheibe und dem Scheibenträger angeordnet ist, wobei der Stützring in einem Abstand zu dem Aufnahmeraum bzw. einer Wand des Aufnahmeraums endet, so dass ausgehend von einer Oberseite der Sortierscheibe der Spalt eine größere Tiefe als die Aufnahmetaschen aufweist. Im Rahmen einer solchen Ausgestaltung kann von den Aufnahmetaschen zu dem Spalt eine Stufe bereitgestellt werden, welche genau einer Stufenform der Bauteile mit einem ersten Durchmesser und einem zweiten Durchmesser entspricht, so dass dann die Bauteile mit ihrer Längsachse in der Scheibenebene angeordnet sind, wobei dann die Längsachse zweckmäßigerweise in Richtung der Drehachse der Sortierscheibe weist.

Gemäß der vorliegenden Erfindung soll in dem Scheibensortierer auch eine vorgegebene Ausrichtung in der Scheibenebene erfolgen. Insbesondere kann vorgesehen sein, dass im Wesentlichen rotationssymmetrische Bauteile wie Schrauben, Bolzen oder dergleichen mit ihrer Symmetrieachse in der Scheibenebene angeordnet werden, wobei auch Bauteile mit einem entlang der Längsachse unterschiedlichen Durchmesser ausgerichtet werden sollen.

Da die Bauteile auch in einer bestimmten Winkelausrichtung in der Scheibenebene angeordnet werden sollen, ist auch die Menge an Bauteilen in den Aufnahmeraum von großer Bedeutung. Die Bauteile müssen für die Ausrichtung noch ausreichend beweglich sein, weshalb der Ausnahmeraum nicht zu voll sein darf.

Andererseits müssen aber auch genügend Bauteile vorhanden sein, um in konkreter Ausrichtung statistisch eine ausreichende Anzahl an Aufnahmetaschen zu füllen und dadurch eine gleichmäßig hohe Förderleistung zu gewährleisten.

Es ist deshalb hinsichtlich eines effizienten und zuverlässigen Betriebes nicht zweckmäßig, den Aufnahmeraum stoßweise mit einer großen Menge an Bauteilen zu befüllen und dann zu warten, bis der Aufnahmeraum sich weitgehend geleert hat. Vielmehr ist im Rahmen der Erfindung vorgesehen, dass regelmäßig kleine Gruppen von Bauteilen von dem Plattenförderer in dem Scheibensortierer überführt werden, so dass in dem Aufnahmeraum des Scheibensortierers stets eine optimale Menge an Bauteilen vorliegt, damit die Bauteile einerseits noch ausreichend beweglich sind, um sich in der Scheibenebene auszurichten und andererseits pro Umdrehung der Sortierscheibe genügend Bauteile von zugeordneten Aufnahmetaschen ergriffen werden.

Der Plattenförderer umfasst einen Aufnahmebunker und zumindest eine, vorzugsweise genau eine Förderplatte. Bei dem Plattenförderer ergibt sich der Vorteil, dass die Menge der bei einem Hub der Förderplatte beförderten Bauteile weitgehend unabhängig von der Menge der Bauteile in dem Aufnahmebunker ist. Die Wände des Bunkers sind zweckmäßigerweise in Richtung der unteren Aufnahmeposition, in der die Förderplatte bei ihrer Hubbewegung die Bauteile aufnimmt, abgeschrägt. Bis der Aufnahmebunker völlig entleert ist, sind somit immer genügend Bauteile vorhanden, um den oberen Rand der Förderplatte zu bedecken.

Bei der Hubbewegung der Förderplatten nach oben fallen dann sämtliche Bauteile herunter, die sich nicht mit ihrem Schwerpunkt über der Förderplatte befinden. Die Fördermenge kann abhängig von der Bauteilgeometrie durch eine schräge oder gerade Anordnung der Förderplatte im Raum, eine Anschrägung des oberen Randes der Förderplatte sowie durch die Breite und Dicke der Förderplatte variiert werden. Zweckmäßigerweise ist die Förderplatte in etwa so dick, dass ihre Bauteile nebeneinander in Richtung der Breite aber nicht in Richtung der Dicke angeordnet werden können. Bei einer relativ dünnen Förderplatte kann auch vermieden werden, dass sich mehrere Bauteile übereinander stapeln.

Wie bei einer Vielzahl von Sortier- und Vereinzelungseinrichtungen wird auch im Rahmen der vorliegenden Erfindung die Gewichtskraft für die Vereinzelung und Ausrichtung der Bauteile benutzt, wobei die horizontale Montageebene der Horizontalebene der montierten Sortier- und Vereinzelungseinrichtung während ihres Betriebs entspricht.

Der Scheibenträger und die dazu üblicherweise parallele Sortierscheibe sind schräg gegenüber der horizontalen Montageebene ausgerichtet, wodurch ein Abschnitt des Scheibenträgers sowie der Sortierscheibe abgesenkt und ein gegenüberliegender Abschnitt angehoben ist. Die auf dem Scheibensortierer aufgegebenen Bauteile befinden sich entsprechend an dem abgesenkten Abschnitt der Sortierscheibe und werden dort durch die Rotation der Sortierscheibe bewegt und bei einer korrekten Ausrichtung von den Aufnahmetaschen aufgenommen.

Hinsichtlich der Drehbewegung der Sortierscheibe werden dann die Bauteile an die Staustrecke übergeben, bevor eine entsprechende Aufnahmetasche wieder den abgesenkten Bereich erreicht. Insbesondere kann eine Abführung der Bauteile in dem durch die Schrägstellung angehobenen Bereich der Sortierscheibe erfolgen.

Gemäß einer bevorzugten Ausgestaltung der Erfindung ist vorgesehen, dass an dem Scheibenträger bezüglich einer durch den Drehantrieb vorgegebenen Drehrichtung hinter der Staustrecke eine Aushebekontur zum Entfernen von Bauteilen angeordnet ist. Mittels der Aushebekontur können insbesondere Bauteile aus den Aufnahmetaschen entnommen werden, welche zuvor nicht an die Staustrecke übergeben wurden. Des Weiteren können auch Bauteile entfernt werden, welche sich zwar am Rand der Sortierscheiben befinden, jedoch nicht oder nicht richtig mit einem Teilabschnitt in einer zugeordneten Aufnahmetasche aufgenommen sind.

Wenn einzelne Bauteile nicht übergeben wurden, weil die Staustrecke voll ist, könnten solche bereits korrekt ausgerichteten Bauteile grundsätzlich auch in den Aufnahmetaschen verbleiben, um dann bei einer nachfolgenden Umdrehung der Sortierscheibe an die Staustrecke übergeben zu werden. Es ist aber auch ein Klemmen der Bauteile oder eine Fehlausrichtung möglich, so dass der beschriebene Aufwurf durch die Hebekontur zweckmäßig ist, damit eine entsprechende Aufnahmetasche durch ein klemmendes oder fehlausgerichtetes Bauteil nicht dauerhaft blockiert wird.

Der Stützring ist üblicherweise feststehend an den Scheibenträger befestigt und an der Übergabestelle zur Staustrecke unterbrochen, um eine Abführung der Bauteile zu ermöglichen. Vorzugsweise ist auch vorgesehen, dass zur Gewährleistung der zuvor beschriebenen einfachen Stufenform der Stützring nicht über den äußeren Rand der Sortierscheibe hinausgeht.

Der Scheibensortierer und der Plattenförderer können in einem gemeinsamen Gehäuse angeordnet sein, um eine modulare und geschützte Baueinheit bereitzustellen.

Das Nachfüllen von Bauteilen in Form einer losen Schütte erfolgt an dem Aufnahmebunker des Plattenförderers, wozu dieser beispielsweise mit einer schwenkbaren Klappe abgedeckt sein kann. Der Scheibensortierer muss während des üblichen Betriebes für einen Benutzer nicht zugänglich sein, so dass dieser innerhalb des Gehäuses verborgen sein kann, wobei jedoch durchsichtige Teile des Gehäuses für eine visuelle Überprüfung zweckmäßig sein können.

Vorzugsweise ist die Staustrecke aus dem Gehäuse herausgeführt, um dort die korrekt ausgerichteten, aufgestauten Bauteile entnehmen zu können. Insbesondere kann - unabhängig von der Ausbildung eines Gehäuses - die Staustrecke an eine Vereinzelungseinrichtung und eine Druckförderanlage angeschlossen sein.

Gemäß einer bevorzugten Ausgestaltung ist vorgesehen, dass der Drehantrieb und/oder ein Hubantrieb des Plattenförderers elektromotorisch angetrieben sind. Im Vergleich zu pneumatischen Antrieben sind elektromotorische Antriebe in der Regel leichter in der eine bestehende Produktionsstruktur zu integrieren.

Gegenstand der Erfindung ist auch ein Verfahren zum Fördern, Vereinzeln und Ausrichten von Bauteilen mit der zuvor beschriebenen Sortier- und Vereinzelungseinrichtung, wobei die Bauteile entlang einer Längsachse einen Schaftabschnitt mit einem ersten Durchmesser und einen daran anschließenden Kopfabschnitt mit einem größeren zweiten Durchmesser aufweisen, wobei die Bauteile als Schütte in den Aufnahmebunker des Plattenförderers gegeben werden, wobei die Bauteile nachfolgend in Gruppen von der zumindest einen Förderplatte des Plattenförderers in den Aufnahmeraum des Scheibenförderers übergeben werden, wobei die Sortierscheibe durch ihre Drehung an zumindest einem Teil der Aufnahmetaschen jeweils ein einzelnes Bauteil in einer vorgegebenen Drehausrichtung aufnimmt und nachfolgend an die Staustrecke übergibt. Die Bauteile werden hierbei derart von der Sortierscheibe aufgenommen, dass die Schaftabschnitte jeweils in einer zugeordneten Aufnahmetasche und die Kopfabschnitte an einem Spalt zwischen der Sortierscheibe und dem Aufnahmeraum angeordnet sind.

Wie bereits zuvor beschrieben, kann im Rahmen des Verfahrens vorgesehen sein, dass die Bauteile derart von der Sortierscheibe aufgenommen werden, dass die Längsrichtung der Bauteile zumindest in etwa in der Scheibenebene liegt und vorzugsweise in Richtung der Drehachse weist.

Die erfindungsgemäße Sortier- und Vereinzelungseinrichtung sowie das erfindungsgemäße Verfahren sind insbesondere für die Förderung, Vereinzelung und Ausrichtung von Schrauben, Bolzen oder dergleichen geeignet. Beispielsweise können Bauteile in Form von Reibschweißbolzen effizient bereitgestellt werden.

Charakteristische Parameter für solche Kopfbolzen sind einerseits die entlang der Längsachse gemessene Länge L und andererseits der an dem Kopfabschnitt bestimmte zweite Durchmesser D. Die erfindungsgemäße Sortier- und Vereinzelungseinrichtung sowie das beanspruchte Verfahren sind insbesondere für Kopfbolzen geeignet, welche im Vergleich zu dem zweiten Durchmesser D eine geringe Länge aufweisen. Insbesondere können auch Kopfbolzen mit einem Verhältnis L : D < 1,2 problemlos verarbeitet werden. Wie zuvor beschrieben kann die Stufe zwischen dem Kopfabschnitt und dem Schaftabschnitt durch einen entsprechend hohen Stützring ausgeglichen werden.

Als weiterer Vorteil ergibt sich vor diesem Hintergrund, dass die erfindungsgemäße Sortier- und Vereinzelungseinrichtung für unterschiedliche Bauteile durch den Austausch einzelner weniger Komponenten schnell umgerüstet werden kann.

Die Erfindung wird im Folgenden anhand einer lediglich ein Ausführungsbeispiel darstellenden Zeichnung erläutert. Es zeigen:
- Fig. 1: eine Sortier- und Vereinzelungseinrichtung zum Fördern, Vereinzeln und Ausrichten von gleich ausgestalteten Bauteilen,
- Fig. 2: die Sortier- und Vereinzelungseinrichtung gemäß der Fig. 1 ohne ein Gehäuse,

- Fig. 3: ein Plattenförderer als Bestandteil der Sortier- und Vereinzelungseinrichtung in einem Vertikalschnitt,
- Fig. 4: ein Scheibensortierer als Bestandteil der Sortier- und Vereinzelungseinrichtung in einer Seitenansicht,
- Fig. 5: Teile des in Fig. 4 dargestellten Scheibensortierers in einem vertikalen Schnitt,
- Fig. 6: einen Scheibenträger mit einer darauf angeordneten Sortierscheibe des Scheibensortierers,
- Fig. 7: die Anordnung gemäß der Fig. 6 nach Entfernen der Sortierscheibe,
- Fig. 8: Teile des Scheibensortierers mit einer nachgelagerten Vereinzelungseinrichtung sowie einer Druckförderanlage.

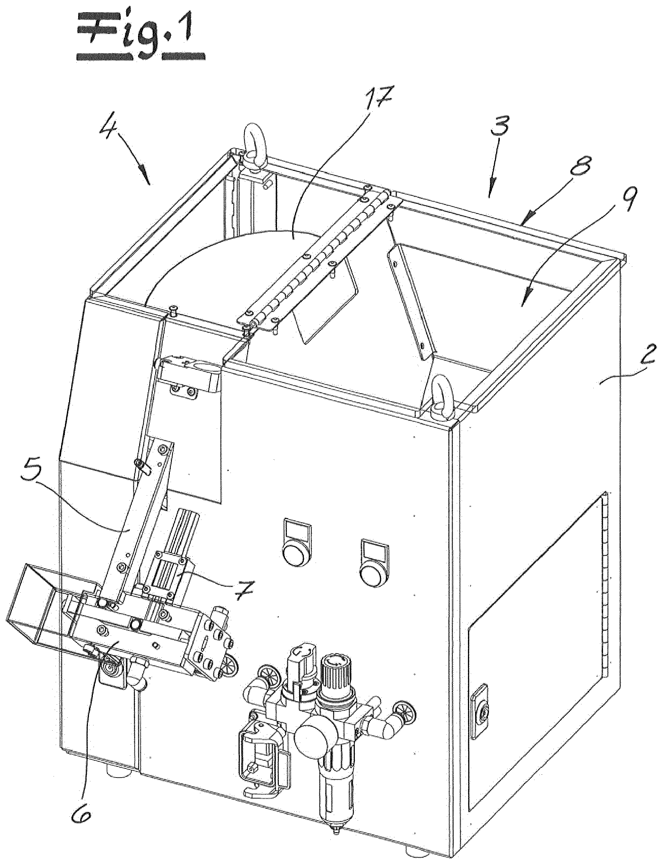

Die Fig. 1 zeigt eine Sortier- und Vereinzelungseinrichtung zum Fördern, Vereinzeln und Ausrichten von gleich ausgestalteten Bauteilen 1, welche als modulare Einheit mit einem Gehäuse 2 versehen ist. In dem Gehäuse 2 sind ein Plattenförderer 3 sowie ein Scheibensortierer 4, welche nachfolgend noch im Detail erläutert werden, angeordnet. Der Scheibensortierer 4 weist auch einen Staustrecke 5 auf, an die außerhalb des Gehäuses 2 eine Vereinzelungseinrichtung 6 und eine Druckförderanlage 7 angeschlossen sind. In dem dargestellten Ausführungsbeispiel ist die Sortier- und Vereinzelungseinrichtung für das Fördern, Vereinzeln und Ausrichten von Bauteilen 1 in Form von Kopfbolzen vorgesehen, die dann einzeln von der Druckförderanlage 7 zu einem Verarbeitungswerkzeug transportiert werden.

Bei den Kopfbolzen kann es sich beispielsweise um Bolzen für ein Reibschweißen handeln. Ohne weiteres können auch Bauteile 1 mit einer ähnlichen Form, beispielsweise andere Arten von Kopfbolzen, Schrauben oder Nieten vorgesehen sein, wobei auch relativ leicht ein Umbau der Sortier- und Vereinzelungseinrichtung erfolgen kann.

Neben verschiedenen Wartungsklappen weist das Gehäuse 2 an seiner Oberseite einen Klappdeckel 8 auf, durch welchen die Bauteile 1 als lose Schütte in einen Aufnahmebunker 9 des Plattenförderers 3 geschüttet werden können.

Wie nachfolgend noch im Detail beschrieben, macht sich die vorliegende Erfindung die Kombination des Plattenförderers 3 mit dem Scheibensortierer 4 zunutze. Erfindungsgemäß ist nämlich vorgesehen, dass die Bauteile 1 in dem Plattenförderer 3 auch in einer bestimmten Weise ausgerichtet werden, wozu die Füllmenge an Bauteilen 1 in den Scheibensortierer 4 in vorgegebenen Grenzen gehalten werden muss.

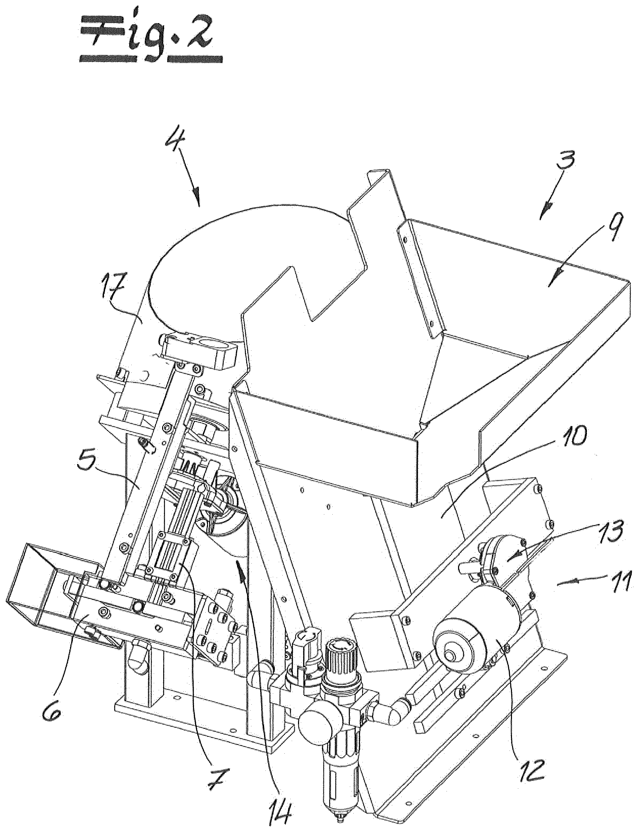

Die Fig. 2 zeigt zunächst die Sortier- und Vereinzelungseinrichtung gemäß der Fig. 1 ohne das Gehäuse 2, wobei weitere Details des Plattenförderers 3 sowie des Scheibensortierers 4 erkennbar sind.

Der Plattenförderer 3 weist eine ausgehend von der senkrechten leicht schräg gestellte Seitenwand des Aufnahmebunkers 9 auf, an der eine einzige Förderplatte 10 geführt ist. Durch die Auf- und Abbewegung der Förderplatte 10 werden Gruppen von Bauteilen 1 angehoben und in den Scheibensortierer 4 überführt. Die Anzahl der Bauteile ist dabei im Wesentlichen durch die Geometrie der Bauteile 1, die Geometrie der Förderplatte 10 und die Hubfrequenz der Förderplatte 10 bestimmt und darüber hinausgehend weitgehend unabhängig von dem Füllstand des Aufnahmebunkers 9, was gerade im Rahmen der vorliegenden Erfindung besonders vorteilhaft ist.

In der Fig. 2 ist auch bereits zu erkennen, dass für den Antrieb der Förderplatte 10 ein Hubantrieb 11 vorgesehen ist, welcher einen drehenden Elektromotor 12 und einen die Drehbewegung in eine Hubbewegung überführendes Getriebe 13 aufweist.

Auch der Scheibensortierer 4 weist als Drehantrieb 14 einen Elektromotor 12' und ein Getriebe 13' auf.

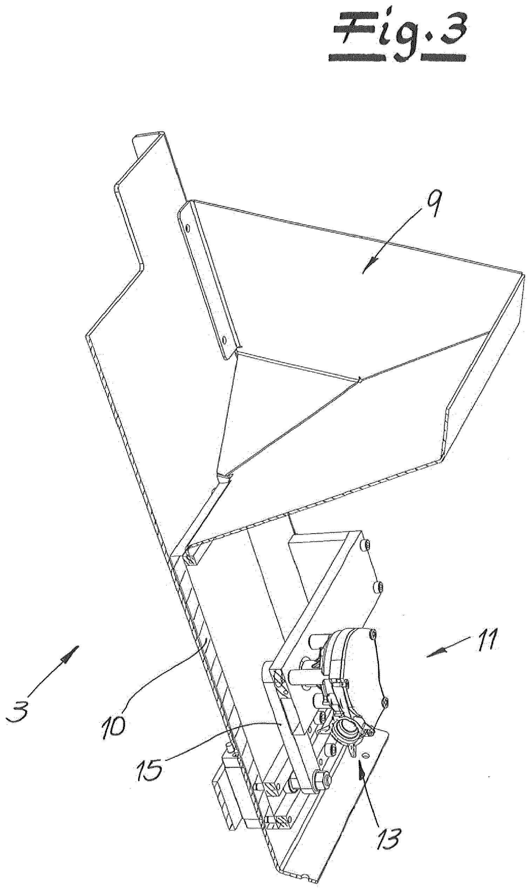

Die beschriebene Ausgestaltung des Plattenförderers 3 ist auch in der Fig. 3 erkennbar, welche einen Vertikalschnitt durch den Plattenförderer 3 zeigt. Das Getriebe 13 zur Überführung der Drehbewegung in die Hubbewegung ist mechanisch einfach ausgeführt und umfasst eine Steuerstange 15, die an ihrem einen Ende drehend angetrieben ist und an ihrem, an die Förderplatte 10 angeschlossenen Ende in eine Kulissenführung eingreift.

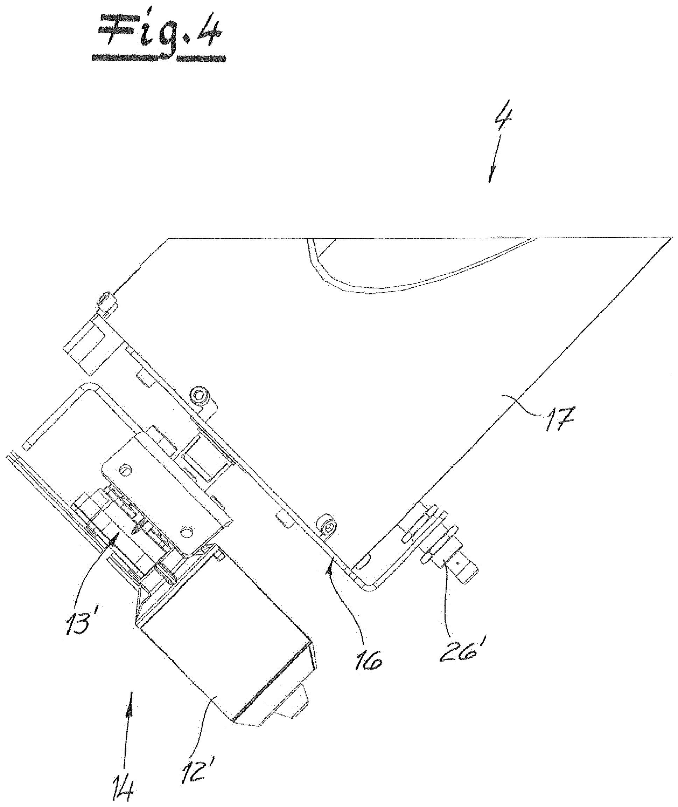

In Fig. 4 ist der dem Plattenförderer 3 hinsichtlich der Handhabung der Bauteile 1 nachgelagerte Scheibensortierer 4 in einer Seitenansicht dargestellt. Neben dem Drehantrieb 14 mit dem Elektromotor 12' und dem Getriebe 13' ist ein Scheibenträger 16 erkennbar, der gegenüber der Horizontalen in einem Winkel von etwa 45° angeordnet ist. Üblicherweise beträgt der Winkel gegenüber der Horizontalen zwischen 30° und 60°.

Auf dem Scheibenträger 16 ist eine Seitenwand 17 angeordnet, welche einen Aufnahmeraum 18 des Scheibensortierers begrenzt.

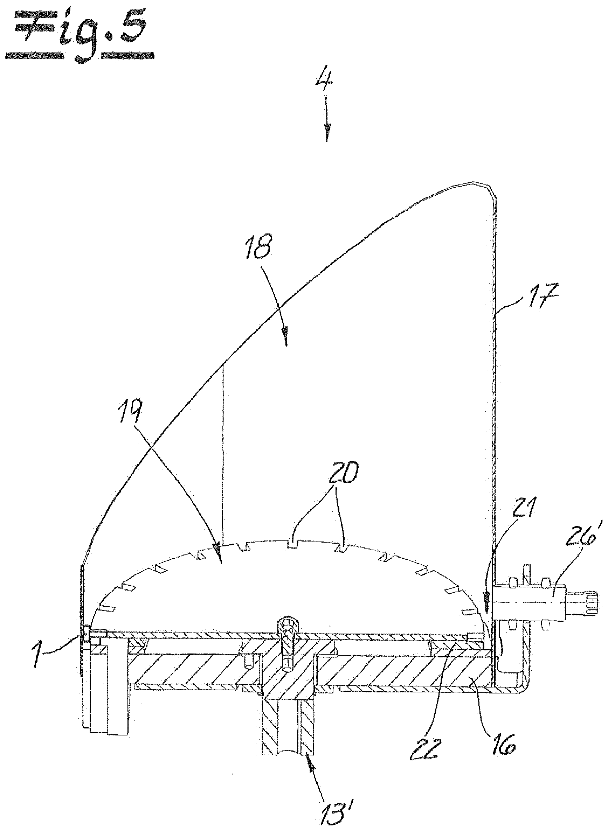

Davon ausgehend zeigt die Fig. 5 einen Vertikalschnitt durch den Scheibensortierer 4, wobei jedoch die Schrägstellung des Scheibenträgers gegenüber der Horizontalen von 45° zur besseren Darstellung der einzelnen Komponenten nicht dargestellt ist.

In dem Aufnahmeraum 18 und über den Scheibenträger 16 ist eine von dem Drehantrieb 14 antreibbare Sortierscheibe 19 angeordnet, die um ihren Umfang eine Vielzahl von Aufnahmetaschen 20 aufweist. Es ist auch zu erkennen, dass zwischen dem äußeren Rand der Sortierscheibe 19 und der Seitenwand 17 des Aufnahmeraumes 18 ein relativ großer Spalt 21 verbleibt, der erfindungsgemäß zusammen mit den Aufnahmetaschen 20 für eine lagerichtige Ausrichtung der einzelnen Bauteile 1 genutzt wird.

Der Spalt 21 ist genau so bemessen, dass der Schaftabschnitt der Bauteile 1 in einer Aufnahmetasche 20 und der daran in einer Längsrichtung der Bauteile 1 anschließende Kopfabschnitt in dem Spalt 21 zwischen dem Rand der Sortierscheibe 19 und der Seitenwand 17 aufgenommen werden kann. Erfindungsgemäß werden also die einzelnen Bauteile 1 derart von der Sortierscheibe 19 aufgenommen, dass die Längsachse der Bauteile 1 in der Scheibenebene liegt. Dies wird auch dadurch erreicht, dass unterhalb der Aufnahmetaschen 20 ein Stützring 22 zwischen der Sortierscheibe 19 und dem Scheibenträger 16 angeordnet ist, wobei der Stützring 22 in einem Abstand zu der Seitenwand 17 des Aufnahmeraumes 18 endet und in dem Ausführungsbeispiel nicht über den äußeren Rand der drehenden Sortierscheibe 19 hinausgeht.

Ausgehend von der Oberseite der Sortierscheibe 19 weist der Spalt 21 also eine größere Tiefe als die Aufnahmetaschen 20 auf.

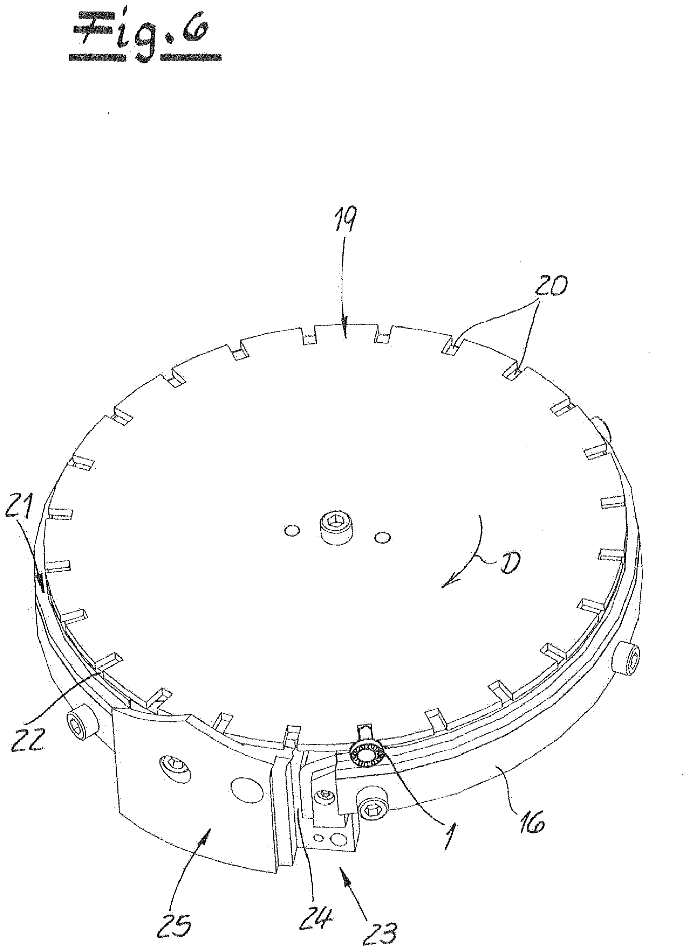

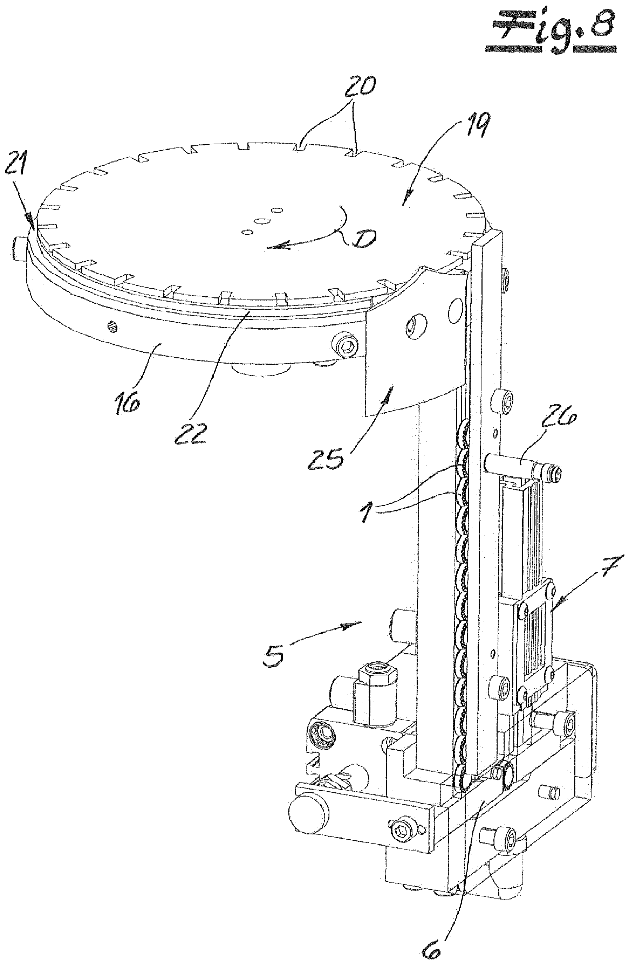

Der Stützring 22 ist fest mit dem Scheibenträger 16 verbunden und an einer Übergabestelle 23 unterbrochen. Die Übergabestelle 23, an der die Staustrecke 5 an den Scheibenträger 16 anschließen, ist in der Fig. 6 genauer dargestellt. Die einzelnen in der Scheibenebene ausgerichteten Bauteile 1 können an der Übergabestelle 23 durch ihr Gewicht in einen Führungsschlitz 24 fallen, in dem die zuvor vorgegebene Ausrichtung beibehalten wird. An den Führungsschlitzen 24 schließt dann die bereits in Fig. 1 und auch in Fig. 8 dargestellte Staustrecke 5 an.

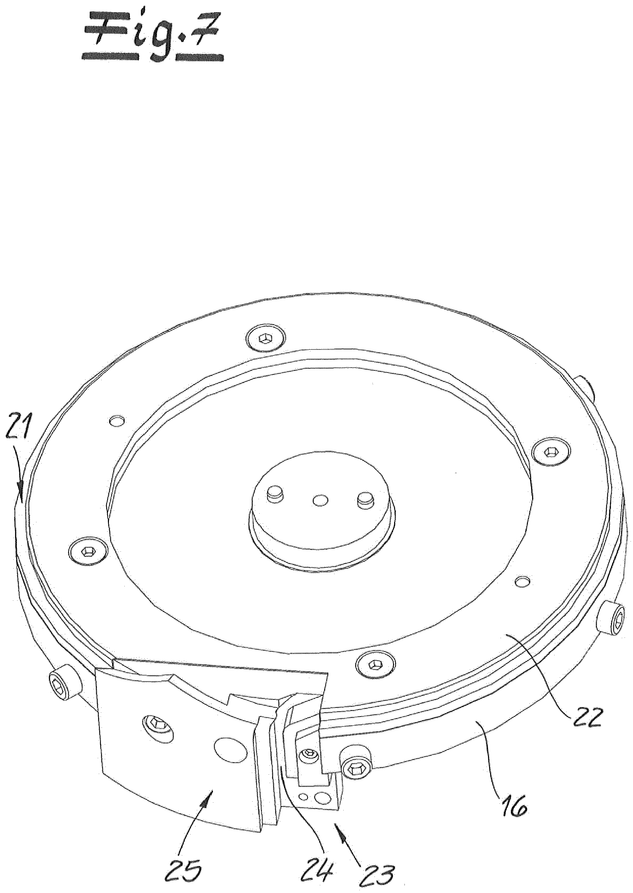

Die Übergabestelle 23 ist auch in der Fig. 7 gut erkennbar, wobei gegenüber der Fig. 6 die Sortierscheibe 19 entfernt ist. Die Fig. 7 zeigt dabei auch, dass der Stützring 22 mit dem Scheibenträger 16 verschraubt ist.

Die Fig. 6 und 7 zeigen des Weiteren eine Aushebekontur 25, die bezüglich der durch den Drehantrieb 14 vorgegebenen Drehrichtung D hinter der Übergabestelle 23 mit dem Führungsschlitz 24 und der anschließenden Staustrecke 5 angeordnet ist und dazu vorgesehen ist, Bauteile 1 aus den Aufnahmetaschen 20 oder an dem Spalt 21 verklemmte Bauteile 1 zu entfernern, welche nicht an die Staustrecke 5 übergeben wurden. Die Aufnahmetaschen 20 werden dadurch freigegeben und können erneut ein Bauteil 1 aufnehmen.

Die Fig. 8 zeigt schließlich die Anordnung gemäß der Fig. 6 mit der anschließenden Staustrecke 5, der Vereinzelungseinrichtung 6 und der Druckförderanlage 7. Zweckmäßigerweise ist an der Staustrecke 5 ein Sensor 26 vorgesehen, mit dem der Füllstand der Staustrecke 5 überprüft werden kann. Wenn die Staustrecke 5 in einem ausreichenden Maße gefüllt ist, kann der Drehantrieb 14 angehalten werden. Ein Sensor 26' kann wie in der Fig. 4 angedeutet auch zur Überprüfung des Füllstandes in dem Aufnahmeraum 18 des Scheibensortierers 4 vorgesehen sein.

## Patentansprüche

1. Sortier- und Vereinzelungseinrichtung zum Fördern, Vereinzeln und Ausrichten von Bauteilen (1) umfassend einen Scheibensortierer (4) mit einem gegenüber einer horizontalen Montageebene schräg ausgerichteten Scheibenträger (16), mit einem an den Scheibenträger (16) anschließenden Aufnahmeraum (18), mit einer in dem Aufnahmeraum (18) über den Scheibenträger (16) in einer Scheibenebene drehbar angeordneten Sortierscheibe (19), die eine Vielzahl von um den Umfang verteilte Aufnahmetaschen (20) für jeweils ein Bauteil (1) aufweist, mit einem an die Sortierscheibe (19) angeschlossenen Drehantrieb (14) und mit einer Staustrecke (5), welche an den Scheibenträger (16) zur Übernahme der Bauteile (1) von der Sortierscheibe (19) angeschlossen ist, wobei die Sortierscheibe (19) mit ihren Aufnahmetaschen (20) dazu eingerichtet ist, die Bauteile (1) in der Scheibenebene in einer vorgegebenen Drehausrichtung aufzunehmen und wobei dem Scheibensortierer (4) ein Plattenförderer (3) mit einem Ausnahmebunker (9) und zumindest einer Förderplatte (10) vorgelagert ist **dadurch gekennzeichnet, dass** die Aufnahmetaschen (20) eine rechteckige Form aufweisen und dass zwischen einem äußeren Rand der Sortierscheibe (19) und der Seitenwand (17) des Aufnahmeraums (18) ein Spalt (21) von zumindest 3 mm verbleibt, um einen ersten Abschnitt der Bauteile (1) in den Aufnahmetaschen (20) und einen zweiten Abschnitt der Bauteile (1) in dem Spalt (21) aufzunehmen, wobei unterhalb der Aufnahmetaschen (20) ein Stützring (22) zwischen der Sortierscheibe (19) und dem Scheibenträger (16) angeordnet ist, wobei der Stützring (22) in einem Abstand zu der Seitenwand (17) des Aufnahmeraums (18) endet, so dass ausgehend von einer Oberseite der Sortierscheibe (19) der Spalt (21) eine größere Tiefe als die Aufnahmetasche (20) aufweist.

2. Sortier- und Vereinzelungseinrichtung nach Anspruch 1, **dadurch gekennzeichnet, dass** an dem Scheibenträger (16) bezüglich einer durch den Drehantrieb (14) vorgegebenen Drehrichtung hinter der Staustrecke (5) eine Aushebekontur (25) zum Entfernen von Bauteilen (1) aus den Aufnahmetaschen (20) angeordnet ist.

3. Sortier- und Vereinzelungseinrichtung nach Anspruch 1 oder 2, **dadurch gekennzeichnet, dass** der Scheibensortierer (4) und der Plattenförderer (3) in einem gemeinsamen Gehäuse (2) angeordnet sind, wobei die Staustrecke (5) aus dem Gehäuse (2) herausgeführt ist.

4. Sortier- und Vereinzelungseinrichtung nach einem der Ansprüche 1 bis 3, **dadurch gekennzeichnet, dass** der Drehantrieb (14) und ein Hubantrieb (11) des Plattenförderers (3) elektromotorisch angetrieben sind.

5. Sortier- und Vereinzelungseinrichtung nach einem der Ansprüche 1 bis 4, **dadurch gekennzeichnet, dass** die Staustrecke (5) an eine Vereinzelungseinrichtung (6) und eine Druckförderanlage (7) angeschlossen ist.

6. Verfahren zum Fördern, Vereinzeln und Ausrichten von Bauteilen mit einer Sortier- und Vereinzelungseinrichtung nach einem der Ansprüche 1 bis 5,
wobei die Bauteile (1) entlang einer Längsachse einen Schaftabschnitt mit einem ersten Durchmesser und einen daran anschließenden Kopfabschnitt mit einem größeren zweiten Durchmesser aufweisen,
wobei die Bauteile (1) als Schütte in den Aufnahmebunker (9) des Plattenförderers (3) gegeben werden,
wobei die Bauteile (1) nachfolgend in Gruppen von der zumindest einen Förderplatte (10) des Plattenförderers (3) in den Aufnahmeraum (18) des Scheibensortierers (4) übergeben werden,
wobei die Sortierscheibe (19) durch ihre Drehung an zumindest einem Teil der Aufnahmetaschen (20) jeweils ein einzelnes Bauteil (1) in einer vorgegebenen Drehausrichtung aufnimmt und nachfolgend an die Staustrecke (5) übergibt,
wobei die Bauteile (1) derart von der Sortierscheibe (19) aufgenommen werden, dass die Schaftabschnitte jeweils in einer zugeordneten Aufnahmetasche (20) und der Kopfabschnitt in einem Spalt (21) zwischen der Sortierscheibe (19) und einer Seitenwand (17) des Aufnahmeraums (18) angeordnet sind.

7. Verfahren nach Anspruch 6, wobei die Bauteile (1) derart von der Sortierscheibe (19) aufgenommen werden, dass die Längsachse der Bauteile (1) in der Scheibenebene liegt.

## Claims

1. A sorting and separating apparatus for conveying, separating and aligning components (1), comprising a turntable (4) with a turntable carrier (16) obliquely aligned relative to a horizontal assembly plane, with a reception space (18) adjoining the turntable carrier (16), with a sorting disk (19) rotatably arranged above the turntable carrier (16) in a disk plane in the reception space (18), the sorting disk comprising a plurality of receiving pockets (20) distributed about the circumference for receiving a component (1) each, with a rotary drive (14) connected to the sorting disk (19) and with a buffer section (5) which is connected to the turntable carrier (16) for accepting the components (1) from the sorting disk (19), wherein the sorting disk (19) with its receiving pockets (20) is adapted to receive the components (1) in the disk plane in a prescribed direction of rotation and wherein the turntable (4) has a plate conveyor (3) arranged ahead of it with a reception bunker (9) and at least one conveyor plate (10), **characterised in that** the receiving pockets (20) have a rectangular shape and **in that** a gap (21) of at least 3mm remains between the outer edge of the sorting dis (19) and the side wall (17) of the reception space (18) for receiving a first portion of the components (1) in the receiving pockets (20) and a second portion of the components (1) in the gap (21), wherein a support ring (22) is arranged below the receiving pockets (20) between the sorting disk (19) and the turntable carrier (16), wherein the support ring (22) ends at a distance from the side wall (17) of the reception space (18), so that, starting from a topside of the sorting disk (19) the gap (21) has a larger depth than the receiving pocket (20).

2. The sorting and separating apparatus according to claim 1, **characterised in that** a lift-out contour (25) for the removal of components (1) from the reception space (20) is arranged on the turntable carrier (16), behind the buffer section (5) with respect to a direction of rotation prescribed by the rotary drive (14).

3. The sorting and separating apparatus according to claim 1 or 2, **characterised in that** the turntable (4) and the plate conveyor (3) are arranged in a joint housing (2), wherein the buffer section (5) is guided out of the housing (2).

4. The sorting and separating apparatus according to one of claims 1 to 3, **characterised in that** the rotary drive (14) and a lift drive (11) of the plate conveyor (3) are driven by an electromotive force.

5. The sorting and separating apparatus according to one of claims 1 to 4, **characterised in that** the buffer section (5) is connected to a separating apparatus (6) and a pneumatic conveyor system (7).

6. A method for conveying, separating and aligning components using a sorting and separating apparatus according to one of claims 1 to 5,
wherein the components (1), along a longitudinal axis, comprise a shaft section with a first diameter and an adjoining head section with a larger second diameter,
wherein the components (1) are fed in bulk form into the reception bunker (9) of the plate conveyor (3),
wherein the components (1) are subsequently transferred in groups from the at least one conveyor plate (10) of the plate conveyor (3) into the reception space (18) of the turntable (4),
wherein, in rotating, the sorting disk (19) receives a single component (1), respectively, at at least a part of the receiving pockets (20) in a prescribed direction of rotation and subsequently transfers it to the buffer section (5),
wherein the components (1) are received by the sorting disk (19) such that the shaft sections are arranged respectively in an associated receiving pocket (20) and the head section is arranged in a gap (21) between the sorting disk (19) and a side wall (17) of the reception space (18).

7. The method according to claim 6, wherein the components (1) are received by the sorting disk (19) in such a way that the longitudinal axis of the components (1) lies in the disk plane.

## Revendications

1. Dispositif de tri et de séparation pour transporter, séparer et orienter des pièces (1), comprenant un trieur à disque (4) avec un support de disque (16) orienté de façon oblique par rapport à un plan de montage horizontal, avec un espace de réception (18) en jonction avec le support de disque (16), avec un disque de tri (19) disposé dans l'espace de réception (18) au-dessus du support de disque (16) de façon rotative dans un plan de disque, lequel présente une pluralité de poches de réception (20) réparties sur la circonférence pour respectivement une pièce (1), avec un entraînement rotatif (14) raccordé au disque de tri (19) et avec une section de retenue (5), laquelle est raccordée au support de disque (16) pour la reprise des pièces (1) du disque de tri (19), dans lequel le disque de tri (19) avec ses poches de réception (20) est étudié pour réceptionner les pièces (1) dans le plan de disque dans un sens de rotation prescrit et dans lequel un transporteur à plateaux (3) avec une trémie de réception (9) et au moins un plateau de transport (10) est monté en amont du trieur à disque (4), **caractérisé en ce que** les poches de réception (20) présentent une forme rectangulaire et **en ce qu'**une fente (21) d'au moins 3 mm subsiste entre un bord extérieur du disque de tri (19) et la paroi latérale (17) de l'espace de réception (18) pour réceptionner une première partie des pièces (1) dans les poches de réception (20) et une deuxième partie des pièces (1) dans la fente (21), dans lequel une bague d'appui (22) est disposée en dessous des poches de réception (20) entre le disque de tri (19) et le support de disque (16), dans lequel la bague d'appui (22) se termine à une distance de la paroi latérale (17) de l'espace de réception (18) de sorte qu'en partant d'un côté supérieur du disque de tri (19), la fente (21) présente une profondeur plus importante que la poche de réception (20).

2. Dispositif de tri et de séparation selon la revendication 1, **caractérisé en ce qu'**au niveau du support de disque (16), derrière la section de retenue (5) compte tenu d'un sens de rotation prescrit par l'entraînement rotatif (14), un contour d'excavation (25) est disposé pour enlever des pièces (1) des poches de réception (20).

3. Dispositif de tri et de séparation selon la revendication 1 ou 2, **caractérisé en ce que** le trieur à disque (4) et le transporteur à plateaux (3) sont disposés dans un boîtier (2) commun, dans lequel la section de retenue (5) est menée hors du boîtier (2).

4. Dispositif de tri et de séparation selon l'une des revendications 1 à 3, **caractérisé en ce que** l'entraînement rotatif (14) et un entraînement de levage (11) du transporteur à plateaux (3) sont entraînés de façon électromotrice.

5. Dispositif de tri et de séparation selon l'une des revendications 1 à 4, **caractérisé en ce que** la section de retenue (5) est raccordée à un dispositif de séparation (6) et une installation de transport par pression (7).

6. Dispositif pour transporter, séparer et orienter des pièces avec un dispositif de tri et de séparation selon l'une des revendications 1 à 5,
dans lequel les pièces (1) présentent, le long d'un axe longitudinal, une partie de tige avec un premier diamètre et une partie de tête en jonction avec celle-ci avec un deuxième diamètre plus grand,
dans lequel les pièces (1) sont distribuées en tant que déversement dans la trémie de réception (9) du transporteur à plateaux (3),
dans lequel les pièces (1) sont ensuite transmises par groupes de l'au moins un plateau de transport (10) du transporteur à plateaux (3) à l'espace de réception (18) du trieur à disque (4),
dans lequel le disque de tri (19) réceptionne par sa rotation au niveau d'au moins une partie des poches de réception (20) respectivement une pièce (1) individuelle dans une orientation de rotation prescrite, et la transmet ensuite à la section de retenue (5),
dans lequel les pièces (1) sont réceptionnées par le disque de tri (19) de manière à ce que les parties de tige sont disposées respectivement dans une poche de réception (20) associée et la partie de tête, dans une fente (21) entre le disque de tri (19) et une paroi latérale (17) de l'espace de réception (18).

7. Procédé selon la revendication 6, dans lequel les pièces (1) sont réceptionnées par le disque de tri (19) de manière à ce que l'axe longitudinal des pièces (1) se situe dans le plan de disque.
